# EUROPEAN PATENT APPLICATION

(11) **EP 3 493 354 A1**
(43) Date of publication of application: **05.06.2019**
(21) Application number: 17382822.9
(22) Date of filing: 01.12.2017
(51) Int. Cl.: H02J 3/46, H02J 13/00, H02J 3/00

(54) **A METHOD AND A SYSTEM FOR ANALYZING AND PROVIDING PERFORMANCE AND INFRASTRUCTURE IMPROVEMENTS FOR A PEER-TO-PEER DISTRIBUTED ENERGY NETWORK**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES); Rodriguez Rodriguez, Pablo, 28013 Madrid (ES); Pilaszanovich, Jakab, 28013 Madrid (ES)
(74) Representative: Carlos Hernando, Borja

(57) **Abstract**

The method comprising receiving, by a server computing system, input data from each one of the nodes of the plurality of nodes of an energy network, wherein the input data of each node comprising a series of energy statistics of the node and an amount of electrical energy flowing through the node; storing the received input data associated with a node identifier in a database operatively connected to the server computing system; analyzing the stored input data regarding a first node of the plurality of nodes to make determinations as to whether the first node is functioning in accordance with a predefined criteria; and providing an indication to the first node as to whether upgrade and/or change functioning of the node and/or one or more of the electrical components based on a result of said analysis.

## Description

### Field of the invention

The present invention generally relates to distributed energy networks. In particular, present invention relates to a method, and to a system, for analyzing and providing performance and infrastructure improvements for a peer-to-peer distributed energy network, in which said energy network is adapted for the distribution of electrical energy, i.e. the nodes included in the energy network are connected in such a way that electrical energy can flow among them.

### Background of the invention

Document 'Architecture and System Analysis of Microgrids with Peer-to-Peer Electricity Sharing to Create a Marketplace which Enables Energy Access', Wardah Inam et al. 9th International Conference on Power Electronics (ICPE 2015 -ECCE Asia), June 2015, discloses a new concept of peer-to-peer electricity sharing which creates a marketplace for electricity. In this marketplace, the people who can afford power generating sources such as solar panels can sell electricity to people who are unable to afford generating sources or who might have access to electricity but require more electricity at certain times. These ad- hoc microgrids created by sharing of resources provide affordable electricity and are enabled by a Power Management Unit (PMU) described in this paper.

Besides, document 'A scalable dc microgrid architecture for rural electrification in emerging regions' P. Achintya Madduri, et al. presents the design and experimental validation of a scalable DC microgrid architecture for rural electrification. The microgrid design has been driven by field data collected from Kenya and India. The salient features of the microgrid are distributed voltage control and distributed storage, which enable developed world grid cost parity. This paper calculates that the levelized cost of electricity for the proposed dc microgrid system will be less than $0.40 per kW-hr. It also presents experimental results from a locally installed DC microgrid prototype that demonstrates the steady state behavior, the perturbation response, and the overall efficiency of the system.

The existing literature focuses on static system designs, such as a centralized microgrid designed and deployed to meet the needs of an entire community, or smaller energy networks connecting few users. However, they do not address how to evolve such systems and more users want to be added to the network, or as electricity demand grow beyond what can be supported by the original design.

The existing solutions are focused on meeting the near-term or predicted needs of a specific number of users. Either anticipated growth (in number of users of electricity demand) is built-in and accommodated for upfront, or it is neglected entirely. On the contrary, present invention focuses on the evolving peer-to-peer energy network, acknowledging that upfront costs must be kept at a minimum, but for an energy network to be useful it must be able to grow with the population it supports and the corresponding needs.

More solutions are therefore needed for analyzing and providing performance and infrastructure improvements (e.g. providing recommendations for nodes upgrades such as upgrading or downgrading storage or generation, and modifications such as adding a new connection between nodes, etc.) in a peer-to-peer distributed energy network.

### Description of the Invention

Embodiments of the present invention provide according to an aspect a method for analyzing and providing performance and infrastructure improvements for a peer-to-peer distributed energy network, wherein said energy network is adapted for the distribution of electrical energy and comprises a plurality of nodes, and wherein each node comprises one or more devices including electrical energy loads and electrical components for permitting the distribution of the electrical energy.

The proposed comprises the reception, by a server computing system, of input data from each one of the nodes of the plurality of nodes of the energy network, wherein the input data of each node comprising a series of energy statistics of the node and an amount of electrical energy flowing through the node; the storage of the received input data associated with a node identifier in a database operatively connected to the server computing system; the analysis of the stored input data regarding a first node of the plurality of nodes to make determinations as to whether the first node is functioning in accordance with a predefined criteria; and the provision of an indication to the first node as to whether upgrade and/or change functioning of the node and/or one or more of the electrical components based on a result of said analysis.

The analysis can be executed every a certain configurable period of time, e.g. every thirty minutes, every hour, every day, every week, etc. or can be executed after the server computing system has received a request from the first node.

Preferably, according to the proposed method the series of energy statistics includes a first information about an existing network topology and components including a location of the node and/or distance of physical connections of the electrical components connecting the node with other nodes of the plurality of nodes, and a second information about a current performance of the energy network including electrical energy lost, over- and/or under- utilized links and/or electrical energy demands that are not met.

In an embodiment, the one or more devices further include electrical energy generation elements such as solar panels, wind turbines, diesel generation engines, among others and/or electrical energy storage elements including batteries and/or capacitors. In this particular embodiment the first information further includes electrical energy generation capabilities and/or electrical energy storage capabilities of the node.

The series of energy statistics may further include a third information about costs such as costs of the one or more devices as well as costs of the electrical components, and data regarding how much the node is paying for accessing to the electrical energy from the one or more devices or through trading with other nodes.

In an embodiment, the indication provided to the first node includes informing the first node about adding a new physical connection with one or more other nodes of the plurality of nodes with which the first node is not connected. Alternatively, the indication may include informing the first node of adding additional electrical energy generation capabilities, adding additional electrical energy storage capabilities and/or moving one or more of the physical connections.

The determination as to whether the first node is functioning in accordance with a predefined criteria may also include both an operational determination of the first node and an associated electrical energy cost.

In another embodiment, the proposed method can be executed for all the nodes of the plurality of nodes, that is, the stored input data is analyzed for all the nodes of the plurality of nodes to make determinations as to whether the energy network is functioning in accordance with a predefined criteria. Then, the server computing system can individually provide to each one of the nodes of the plurality of nodes an indication as to whether upgrade and/or change functioning of the node and/or one or more of the electrical components based on a result of said analysis.

According to this last embodiment, the server computing system can be physically connected to each one of the nodes of the plurality of nodes using connections in the energy network to receive the input data, or alternatively the server computing system can be wirelessly connected to each one of the nodes via a communication network, or even the server computing system can be physically connected to one or more of the nodes of the plurality of nodes and wirelessly connected to one or more of the nodes of the plurality of nodes via said communication network.

The plurality of nodes of the energy network can be connected between them either through static, or fixed, connections or through mobile, or non-fixed, connections.

Embodiments of the present invention also provide according to another aspect a system configured to perform the method embodiment steps and operations summarized above and disclosed in detail below.

In particular, the proposed system comprises:
- a plurality of connected nodes of an energy network adapted and configured to distribute energy between them, preferably electrical energy, and each comprising one or more devices including energy loads, among others, and electrical components for permitting the distribution of the electrical energy;
- a server computing system configured to receive input data from each one of the nodes of the plurality of nodes of the energy network, wherein the input data of each node comprising a series of energy statistics of the node and an amount of electrical energy flowing through the node;
- a database operatively connected to the server computing system adapted and configured to store the received input data associated with a node identifier;
- at least one processing unit hosted by the server computing system, said processing unit being adapted and configured to analyze the stored input data regarding a first node of the plurality of nodes to make determinations as to whether the first node is functioning in accordance with a predefined criteria; and
- a communications unit of the server computing system adapted and configured to provide an indication to the first node as to whether upgrade and/or change functioning of the node and/or one or more of the electrical components based on a result of said analysis.

In an embodiment, the processing unit is further adapted and configured to analyze the stored input data regarding all the nodes of the plurality of nodes to make determinations as to whether the energy network is functioning in accordance with a predefined criteria, and the communications unit is further adapted and configured to individually provide to each one of the nodes of the plurality of nodes an indication as to whether upgrade and/or change functioning of the node and/or one or more of the electrical components based on a result of said analysis.
the server computing system can be physically connected to each one of the nodes of the plurality of nodes, or can be wirelessly connected to each one of the nodes via a communication network or even can be physically connected to one or more of the nodes of the plurality of nodes and wirelessly connected to one or more of the nodes of the plurality of nodes via said communication network.

In the proposed system, the loads may include lighting systems and/or appliances including televisions, radios, kitchen appliances and refrigerators and/or heating equipment, among others.

In addition, in the proposed system, the one or more devices may further include electrical energy generation elements such as solar panels, wind turbines, diesel generation systems, geothermal systems, a human-powered crank generator, etc. and/or electrical energy storage elements such as batteries or capacitors.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

The architecture described herein is a critical component of an evolvable peer-to-peer distributed energy network. Present invention enables the proposed architecture to grow at minimal incremental cost. Therefore, it represents a much more efficient and flexible overall system design than what has been described in the literature (which predominantly assumes steady-state system designs that do not evolve in terms of energy needs, and therefore, topologies).

### Brief Description of the Drawings

The previous and other advantages and features will be more fully understood from the following detailed description of embodiments, with reference to the attached drawings, which must be considered in an illustrative and non-limiting manner, in which:
Fig. 1 is a flow chart illustrating an embodiment of a method for analyzing and providing performance and infrastructure improvements for peer-to-peer distributed energy networks.
Fig. 2 is a schematic illustration to depict a system in which the embodiment of Fig. 1 can be implemented.
Fig. 3 schematically illustrates another embodiment of the present invention. In this case, three different categories of inputs are considered for providing the performance and infrastructure improvements.

### Detailed Description of the Invention and of Preferred Embodiments

Present invention provides methods for analyzing and providing performance and infrastructure improvements for peer-to-peer energy networks. The methods run at a central location, preferably at a server computing system 10 including one or more processing units and at least one memory, which gathers statistics about the energy network nodes, e.g. homes (which include one or more devices preferably comprising a combination of electrical energy generation elements, electrical energy storage elements and/or electrical energy loads) and the electrical energy flowing through them by way of a communication network. The server computing system 10 may be physically connected to the energy network nodes, and use the connections in the energy network to receive the statistics and communicate any recommendations. Alternatively, the communication may use a separate network and the server computing system 10 may be far remote from the node(s) being assessed.

It should be noted that the presence of electrical energy generation elements (e.g. solar panels, wind turbines, etc.) and electrical energy storage elements (e.g. batteries, etc.) in a node is not mandatory. The basic configuration scheme of a node applies if there are only electrical energy loads at the node, i.e. the one or more devices a node has need only to include some type of electrical energy loads, e.g. a home appliance, such as a television, a microwave, etc. or lights or any type of refrigeration system.

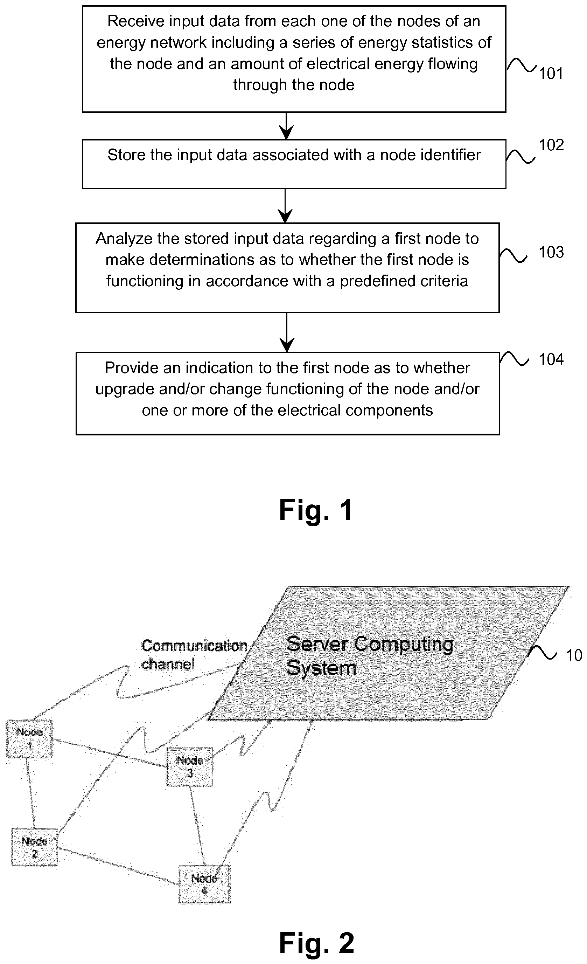

Figs. 1 and 2 illustrate an embodiment of the present invention. According to this embodiment the server computing system 10 receives, step 101, input data from each the nodes of the energy network including a series of energy statistics of the node and an amount of electrical energy flowing through the node. At step 102, the server computing system 10 stores the received input data associated with a node identifier in a database associated to the server computing system (not illustrated in the figures). Then, step 103, the server computing system 10 via one or more of its processing units analyzes the stored input data regarding a given node of the energy network (or first node as termed in the claims) to make determinations as to whether the that node is functioning in accordance with a predefined criteria. Finally, the server computing system 10 via a communications unit thereof provides an indication to the node in question as to whether upgrade and/or change functioning of the node and/or one or more of its electrical components.

It should be noted that the above described embodiment can be also performed for all the nodes of the energy network in order to make performance determinations of the entire energy network. In this case, depending on the result of the analysis, the server computer system 10 can individually provide to each one of the nodes of the energy network an indication as to whether upgrade and/or change functioning of the node and/or one or more of the electrical components.

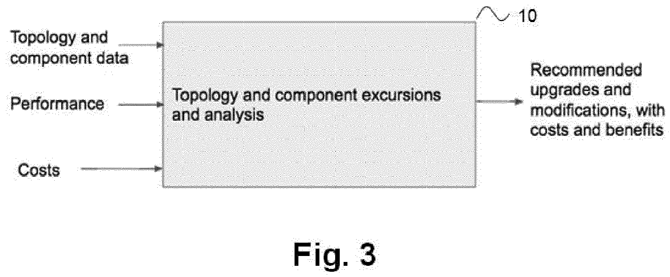

With reference to Fig. 3, therein it is illustrated another embodiment of the present invention. In this case, the server computer system 10 takes three different categories of inputs, i.e. the series of energy statistics include:
- a first information about the existing network topology and components, including locations of nodes, distances of physical connections, e.g. wires, (or other connections for transferring energy), and generation and/or storage capabilities at each node.
- a second information related to the current performance of the energy network such as electrical energy that is lost, for instance due to full storage units or in transmission, over- and under-utilized links, and electrical energy demands that are not met.
- a third information about costs of new electrical components and of the one or more devices included in a node and potentially data regarding how much each user is paying for access to electrical energy from their own devices or through trading with others.

It should be noted that in other embodiments of the present invention, for instance the ones describe for Figs. 1 and 2, the use of the third information is not mandatory.

Given these inputs the server computer system 10 explores a range of excursions from the current topology to meet the needs at the lowest cost. Example excursions include adding a new connection (e.g. wire) between two nodes that are currently not connected, adding additional storage or generation at specific node(s), or moving storage, generation, or wires.

The optimization criterion executed by the server computer system 10 can be node-based. That is, for each node, what does that node want to change to decrease its expenses, or potentially increase its profit from trading electrical energy. Alternatively, the optimization criterion can be focused on overall energy network performance. This may involve incentivizing a node to install new wires or other devices/equipment even if it won't immediately benefit them, but such upgrades provide the energy network with improved capacity or robustness.

In the node-based optimization, the method focuses on the amount that node is paying for energy, which comprises a combination of depreciation of devices, devices rent or loan for devices purchase, and amount paid to other network nodes for supply and transport of energy, as well as amount earned from selling or transporting energy to other nodes. The server computer system 10 may regularly (e.g. on a daily, weekly or monthly basis) consider options for upgrading the capabilities at that node. The optimization may make use of historical data such as electrical energy produced and times of reaching storage limits. If so, the server computer system 10 estimates the electrical energy performance, and optionally associated cost, if the node had upgraded the generation or storage capacity.

For example, the optimization could estimate the electrical energy that would have been produced if the next larger solar panel had been installed at the node and calculated the reduction in amount paid for purchasing electrical energy from others and potentially selling electrical energy to others (compared to what a loan for purchase of the new panel, with a potential discount for trading in the smaller panel) to determine if the node would have paid less for energy during that time period. And it could compare cost and performance if the next larger storage unit were installed in order to take better advantage of low energy prices during off-peak hours. The server computer system 10 can also compare the price offered by an immediate neighbor to that offered by a further node, and estimate the costs to run a wire to the further node, comparing that to the savings over a specified period gained from adding a direct connection to that node. Separate excursions could consider the impacts of increasing capability at trading partners and estimating the impact that would have on price, potentially recommending that the node under consideration subsidize the capital improvements at trading partners rather than itself in order to provide the lowest cost service.

Present invention can focus on the overall energy network efficiency, which may relate to the average price a node pays for electrical energy, or the maximum per-unit price a node pays, or other appropriate metric. A straightforward example situation consists of a node that can satisfy all its needs with the current generation, storage, and connections it has, but it is well located to act as a pass-through between nodes with surplus electrical energy and nodes with deficits. In that case, the node under consideration would need to add new physical connections (e.g. wires) to additional neighbors-and potentially some storage-in order to improve the overall energy network efficiency. In such a case, the cost to the node under consideration is estimated and an incentive is devised to offset those costs, so that, even though that node may not directly benefit, the other users in the energy network do benefit.

The server computing system 10 can be used for the initial recommendation of how to deploy a new energy network in a community, before any assets exist (or perhaps where individuals have specific assets, but they are not networked). The server computing system 10 will determine at which nodes is it best to place generation and storage, and how much of each for estimated wires, based on estimated generation and consumption patterns. It will also determine which nodes to connect with wires (or other mechanism for transporting energy). The server computing system 10 can also use external information such as satellite imagery to estimate the effectiveness of solar panels for potential locations. The server computing system 10 can be configured to optimize the cost paid by the community for estimated usage, or it may include more complicated optimization functions, accounting for redundancy in the energy network to increase robustness form outages.

Alternatively, after an initial energy network is established, there will be new nodes that wish to join the energy network. In this example, the server computing system 10 can determine the best way in which to bring that node into the energy network. It will recommend to which other node(s) it should connect and what devices (generation and/or storage) to buy. The server computing system 10 can be configured for various optimization criteria, which can include minimizing the price the new node pays for its expected electrical energy usage, or to maximize profit that node may make, or other criterion. The server computing system 10 can also estimate what influence the addition of this new node will have on the rest of the energy network. A potential recommendation may be for the new node to contribute to upgrading another node's devices in exchange for lower energy prices, rent, or other means. The server computing system 10 can also present several recommendations with expected costs and benefits for the user to select from.

The server computing system 10 may also be used not to recommend devices, but to consider how different pricing strategies may affect the profit or loss experienced by a node. In this implementation, rather than varying the equipment or topology with fixed prices and calculating costs, the server varies the prices the node under question charges for the electrical energy it supplies or transports to others and estimates the change in revenue that may result in order to provide the user insight into how to set prices in different circumstances.

Much of the focus has assumed nodes and connections are static over relatively long time frames (e.g. days or longer). However, a peer-to-peer energy network is conducive to mobile nodes as well. This could correspond to an electric car, or a person who brings a battery to a charging station and then brings it home to power devices. The server computing system 10 can consider such situations where a user may use other such delay-tolerant means for transporting energy other than through fixed infrastructure. An example may be if a battery has sufficient storage for a user's full day, then the server computing system 10 could recommend foregoing purchasing wires to connect to another node, and instead recommend that the user travel to a location where it can charge the battery and then return home. Such a decision may also include external information such as knowing that that user travels into the city each day anyway.

It is envisioned that peer-to-peer energy networks will start small, with low usage and focus on minimizing costs for equipment and infrastructure. But, ideally, the income users have for energy will grow over time, as will their energy usage. With that longer term perspective, while low-voltage systems will minimize costs for low usage, as the network grows, it may cross a point at which the infrastructure will need to be upgraded to higher voltage levels to support the higher energy demands and prevent excessive electrical energy loss or devices overloads. The server computing system 10 is ideal for evaluating when and how best to transition the energy network into a different structure (potentially hierarchical) that includes some components that operate at higher voltages and include the associated safety equipment/devices. The server computing system 10 can recommend how to connect the upgraded infrastructure as well as provide a means to analyze how to distribute the costs for the upgrade fairly among the network nodes.

While the foregoing is directed to embodiments of the present invention, other and further embodiments of the invention may be devised without departing from the basic scope thereof. For example, other aspects may be implemented in hardware or software or in a combination of hardware and software.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is determined by the claims that follow.

## Claims

1. A method for analyzing and providing performance and infrastructure improvements for a peer-to-peer distributed energy network, wherein said energy network being adapted for the distribution of electrical energy and comprising a plurality of nodes, and wherein each node comprising one or more devices including electrical energy loads and electrical components for permitting the distribution of the electrical energy, the method comprising:
receiving, by a server computing system, input data from each one of the nodes of the plurality of nodes of the energy network, wherein the input data of each node comprising a series of energy statistics of the node and an amount of electrical energy flowing through the node;
storing the received input data associated with a node identifier in a database operatively connected to the server computing system;
analyzing the stored input data regarding a first node of the plurality of nodes to make determinations as to whether the first node is functioning in accordance with a predefined criteria; and
providing an indication to the first node as to whether upgrade and/or change functioning of the node and/or one or more of the electrical components based on a result of said analysis.

2. The method of claim 1, wherein the series of energy statistics includes:
a first information about an existing network topology and components including a location of the node and/or distance of physical connections of the electrical components connecting the node with other nodes of the plurality of nodes; and
a second information about a current performance of the energy network including electrical energy lost, over- and/or under- utilized links and/or electrical energy demands that are not met.

3. The method of claim 2, wherein the one or more devices further includes electrical energy generation elements including solar panels, wind turbines, diesel generation engines and/or electrical energy storage elements including batteries and/or capacitors and wherein the first information further includes electrical energy generation capabilities and/or electrical energy storage capabilities of the node.

4. The method of claims 2 or 3, wherein the series of energy statistics further includes a third information about costs including costs of the one or more devices as well as costs of the electrical components and data regarding how much the node is paying for accessing to the electrical energy from the one or more devices or through trading with other nodes.

5. The method of claim 3, wherein said indication at least include informing the first node about adding a new physical connection with one or more other nodes of the plurality of nodes with which the first node is not connected, adding additional electrical energy generation capabilities, adding additional electrical energy storage capabilities and/or moving one or more of the physical connections.

6. The method of claim 1, wherein said determination as to whether the first node is functioning in accordance with a predefined criteria includes both an operational determination of the first node and an associated electrical energy cost.

7. The method of claim 1, wherein the analysis being automatically executed every a certain configurable period of time or being executed after the server computing system having received a request from the first node.

8. The method of claim 1, further comprising:
analyzing the stored input data regarding all the nodes of the plurality of nodes to make determinations as to whether the energy network is functioning in accordance with a predefined criteria; and
individually providing to each one of the nodes of the plurality of nodes an indication as to whether upgrade and/or change functioning of the node and/or one or more of the electrical components based on a result of said analysis.

9. The method of claim 1 or 8, wherein the server computing system being physically connected to each one of the nodes of the plurality of nodes using connections in the energy network to receive the input data or wherein the server computing system being wirelessly connected to each one of the nodes via a communication network or wherein the server computing system being physically connected to one or more of the nodes of the plurality of nodes and wirelessly connected to one or more of the nodes of the plurality of nodes via said communication network.

10. The method of claim 1 or 8, wherein the plurality of nodes of the energy network being connected between them either through static, or fixed, connections or through mobile, or non-fixed, connections.

11. A system for analyzing and providing performance and infrastructure improvements in a peer-to-peer distributed energy network, the system comprising:
a plurality of nodes of an energy network, wherein said energy network being configured and adapted for the distribution of electrical energy and wherein each of said plurality of nodes comprising one or more devices including electrical energy loads and electrical components for permitting the distribution of the electrical energy;
a server computing system configured to receive input data from each one of the nodes of the plurality of nodes of the energy network, wherein the input data of each node comprising a series of energy statistics of the node and an amount of electrical energy flowing through the node;
a database operatively connected to the server computing system adapted and configured to store the received input data associated with a node identifier;
at least one processing unit hosted by the server computing system, said processing unit being adapted and configured to analyze the stored input data regarding a first node of the plurality of nodes to make determinations as to whether the first node is functioning in accordance with a predefined criteria; and
a communications unit of the server computing system adapted and configured to provide an indication to the first node as to whether upgrade and/or change functioning of the node and/or one or more of the electrical components based on a result of said analysis.

12. The system of claim 11, wherein:
the processing unit being further adapted and configured to analyze the stored input data regarding all the nodes of the plurality of nodes to make determinations as to whether the energy network is functioning in accordance with a predefined criteria; and
the communications unit being further adapted and configured to individually provide to each one of the nodes of the plurality of nodes an indication as to whether upgrade and/or change functioning of the node and/or one or more of the electrical components based on a result of said analysis.

13. The system of claim 11 or 12, wherein the server computing system being physically connected to each one of the nodes of the plurality of nodes or wherein the server computing system being wirelessly connected to each one of the nodes via a communication network or wherein the server computing system being physically connected to one or more of the nodes of the plurality of nodes and wirelessly connected to one or more of the nodes of the plurality of nodes via said communication network.

14. The system of claim 11 or 12, wherein the one or more devices further includes electrical energy generation elements including solar panels, wind turbines, diesel generation engines and/or electrical energy storage elements including batteries and/or capacitors.

15. A non-transitory computer readable medium comprising code instructions that when executed in at least one processor of a computer system implement the method according to claim 1 or 8.
